# EUROPÄISCHE PATENTANMELDUNG

(11) **EP 2 060 825 A2**
(43) Veröffentlichungstag der Anmeldung: **20.05.2009**
(21) Anmeldenummer: 08168351.8
(22) Anmeldetag: 05.11.2008
(51) Int. Cl.: F16F 15/16

(54) **Torsionsschwingungsdämpferanordnung**

(30) Priorität: 15.11.2007 DE 102007054568; 25.06.2008 DE 102008002632
(71) Anmelder: ZF Friedrichshafen AG, 88038 Friedrichshafen (DE)
(72) Erfinder: Busold, Thomas, 36039 Fulda (DE); Carlson, Cora, 97456 Dittelbrunn (DE); Dögel, Thomas, 97688 Bad Kissingen (DE); Orlamünder, Andreas, 97453 Schonungen (DE); Schade, Thomas, 97464 Niederwerrn (DE)

(57) **Zusammenfassung**

Eine Torsionsschwingungsdämpferanordnung, umfasst eine Primärseite (20) und eine gegen die Wirkung einer Dämpferfluidanordnung um eine Drehachse (A) bezüglich der Primärseite (20) drehbare Sekundärseite (44), wobei die Dämpferfluidanordnung in wenigstens einer Verdrängungskammer (32, 33) ein erstes Dämpferfluid mit geringerer Kompressibilität und in wenigstens einer Ausgleichskammer (36) ein zweites Dämpferfluid mit höherer Kompressibilität aufweist, wobei bei durch Drehung der Primärseite (20) bezüglich der Sekundärseite (44) ausgelöster Verringerung des Volumens wenigstens einer Verdrängungskammer (32, 33) und dabei Verdrängung von Fluid aus dieser das zweite Dämpferfluid in wenigstens einer Ausgleichskammer (36) komprimiert wird, wobei die wenigstens eine Verdrängungskammer (32, 33) begrenzt ist durch eine erste Verdrängungskammerbaugruppe (24), welche die wenigstens eine Verdrängungskammer (32, 33) mit Stirnwandungen (26, 28) in beiden axialen Richtungen und mit einer Umfangswandung (30) in einer radialen Richtung begrenzt, und durch eine zweite Verdrängungskammerbaugruppe (46), welche bezüglich der ersten Verdrängungskammerbaugruppe (24) um die Drehachse (A) drehbar ist und die wenigstens eine Verdrängungskammer (32, 33) in der anderen radialen Richtung begrenzt, wobei zwischen den beiden Stirnwandungen (26, 28) und der zweiten Verdrängungskammerbaugruppe (46) wirkende erste Dichtungsanordnungen zur Erzeugung eines im Wesentlichen fluiddichten Abschlusses der wenigstens einen Verdrängungskammer (32, 33) vorgesehen sind.

## Beschreibung

Die vorliegende Erfindung betrifft eine Torsionsschwingungsdämpferanordnung, umfassend eine Primärseite und eine gegen die Wirkung einer Dämpferfluidanordnung um eine Drehachse bezüglich der Primärseite drehbare Sekundärseite, wobei die Dämpferfluidanordnung in wenigstens einer Verdrängungskammer ein erstes Dämpferfluid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von Fluid aus dieser das zweite Dämpferfluid in wenigstens einer Ausgleichskammer komprimiert wird.

Bei einer derartigen Torsionsschwingungsdämpferanordnung muss dafür gesorgt werden, die verschiedenen Dämpferfluide am Austritt aus den diese jeweils aufnehmenden Volumenbereichen nach außen zu hindern, also Leckagen zu vermeiden. Weiterhin muss dafür gesorgt werden, dass eine Durchmischung der beiden Dämpferfluide, also der Eintritt derselben in die für die jeweils anderen Dämpferfluide vorgesehenen abgeschlossenen Volumenbereiche, vermieden werden.

Es ist daher die Zielsetzung der vorliegenden Erfindung, eine eingangs genannte Torsionsschwingungsdämpferanordnung so auszugestalten, dass Probleme mit einem Fluidaustritt oder eine Fluiddurchmischung vermieden werden können.

Erfindungsgemäß wird diese Aufgabe gelöst durch eine Torsionsschwingungsdämpferanordnung, umfassend eine Primärseite und eine gegen die Wirkung einer Dämpferfluidanordnung um eine Drehachse bezüglich der Primärseite drehbare Sekundärseite, wobei die Dämpferfluidanordnung in wenigstens einer Verdrängungskammer ein erstes Dämpferfluid mit geringerer Kompressibilität und in wenigstens einer Ausgleichskammer ein zweites Dämpferfluid mit höherer Kompressibilität aufweist, wobei bei durch Drehung der Primärseite bezüglich der Sekundärseite ausgelöster Verringerung des Volumens wenigstens einer Verdrängungskammer und dabei Verdrängung von Fluid aus dieser das zweite Dämpferfluid in wenigstens einer Ausgleichskammer komprimiert wird, wobei:
- die wenigstens eine Verdrängungskammer begrenzt ist durch eine erste Verdrängungskammerbaugruppe, welche die wenigstens eine Verdrängungskammer mit Stirnwandungen in beiden axialen Richtungen und mit einer Umfangswandung in einer radialen Richtung begrenzt, und durch eine zweite Verdrängungskammerbaugruppe, welche bezüglich der ersten Verdrängungskammerbaugruppe um die Drehachse drehbar ist und die wenigstens eine Verdrängungskammer in der anderen radialen Richtung begrenzt, wobei zwischen den beiden Stirnwandungen und der zweiten Verdrängungskammerbaugruppe wirkende erste Dichtungsanordnungen zur Erzeugung eines im Wesentlichen fluiddichten Abschlusses der wenigstens einen Verdrängungskammer vorgesehen sind,
   oder/und
- die erste Verdrängungskammerbaugruppe in Zuordnung zu der wenigstens einen Verdrängungskammer einen radial auf die zweite Verdrängungskammerbaugruppe zu sich erstreckenden ersten Umfangsbegrenzungsvorsprung aufweist, welcher die wenigstens eine Verdrängungskammer in einer ersten Umfangsrichtung begrenzt, und die zweite Verdrängungskammerbaugruppe in Zuordnung zu der wenigstens einen Verdrängungskammer einen auf die Umfangswandung der ersten Verdrängungskammerbaugruppe zu sich erstreckenden zweiten Umfangsbegrenzungsvorsprung aufweist, welcher die wenigstens eine Verdrängungskammer in einer zweiten Umfangrichtung begrenzt, wobei an den Umfangsbegrenzungsvorsprüngen zwischen diesen und der jeweils anderen Verdrängungskammerbaugruppe wirkende zweite Dichtungsanordnungen zur Erzeugung eines im Wesentlichen fluiddichten Abschlusses der wenigstens einen Verdrängungskammer vorgesehen sind,
   oder/und
- die wenigstens eine Ausgleichskammer in einem Ausgleichszylinder gebildet ist, in welchem ein Trennkolben bewegbar ist, welcher das erste Dämpferfluid vom zweiten Dämpferfluid trennt, wobei eine zwischen dem Trennkolben und dem Ausgleichszylinder wirkende dritte Dichtungsanordnung zur Erzeugung eines im Wesentlichen fluiddichten Abschlusses der wenigstens einen Ausgleichskammer vorgesehen ist.

Bei der erfindungsgemäßen Torsionsschwingungsdämpferanordnung sind also in verschiedenen hinsichtlich des Fluidaustritts bzw. einer Fluiddurchmischung kritischen Bereichen entsprechende Dichtungsanordnungen vorgesehen.

Da in den das erste Dämpferfluid enthaltenden Verdrängungskammern insbesondere bei Übertragung großer Drehmomente bzw. großer Drehmomentschwankungen sehr hohe Drücke von bis zu 70 bar und mehr herrschen können, wird vorgeschlagen, dass wenigstens eine erste Dichtungsanordnung zweistufig ausgebildet ist mit einem ersten Dichtungsbereich, welcher im Wesentlichen zwischen einer axialen Seite einer Stirnwandung und einer axialen Seite der zweiten Verdrängungskammerbaugruppe wirkt, und einem zweiten Dichtungsbereich, welcher im Wesentlichen zwischen einer Umfangsfläche der Stirnwandung und einer der Umfangsfläche der Stirnwandung radial gegenüber liegenden Umfangsfläche der zweiten Verdrängungskammerbaugruppe wirkt.

Dabei kann beispielsweise vorgesehen sein, dass der erste Dichtungsbereich ein erstes ringartiges Dichtungselement umfasst, welches mit einer ersten Abstützfläche bezüglich der zweiten Verdrängungskammerbaugruppe abgestützt ist, und ein zweites Dichtungselement umfasst, welches mit einer ersten Abstützfläche über ein Vorspannelement bezüglich der Stirnwandung abgestützt ist, wobei die beiden Dichtungselemente mit jeweiligen zweiten Abstützflächen aneinander abgestützt sind. Wenigstens eine der ersten Abstützflächen kann dabei im Wesentlichen orthogonal zur Drehachse stehen. Die zweiten Abstützflächen können bezüglich der Drehachse im Wesentlichen konisch geneigt verlaufen.

Um übermäßige Reibungen im Bereich der ersten Dichtungsanordnung so weit als möglich zu vermeiden, wird vorgeschlagen, dass das zweite Dichtungselement nicht in Kontakt mit der zweiten Verdrängungskammerbaugruppe ist oder treten kann.

Das Vorspannelement kann beispielsweise eine Wellfeder oder eine Tellerfeder sein.

Um den in einer Verdrängungskammer vorherrschenden hohen Druck auch zur Erhöhung der Fluiddichtung zu nutzen, wird weiter vorgeschlagen, dass in der Stirnwandung wenigstens eine Verbindungsaussparung gebildet ist, über welche eine Fluidverbindung zwischen wenigstens einer Verdrängungskammer und einer von der zweiten Verdrängungskammerbaugruppe abgewandten Seite des zweiten Dichtungselements gebildet ist. Auf diese Art und Weise kann das zweite Dichtungselement verstärkt gegen das erste Dichtungselement und dieses somit auch verstärkt gegen die zweite Verdrängungskammerbaugruppe gepresst werden.

Der zweite Dichtungsbereich kann in der Stirnwandung oder der zweiten Verdrängungskammerbaugruppe eine nutartige und radial offene Einsenkung umfassen, in welcher ein am jeweils anderen Bauteil dichtend anliegendes ringartiges Dichtungselement angeordnet ist.

Dem ringartigen Dichtungselement kann eine Vorspannanordnung zugeordnet sein, um dieses in Anlage an dem jeweils anderen Bauteil vorzuspannen. Diese Vorspannanordnung kann wenigstens ein federelastisch wirksames Vorspannelement umfassen, kann alternativ oder zusätzlich jedoch eine Druckfluidverbindung umfassen, über welche die nutartige Einsenkung in Verbindung mit wenigstens einer Verdrängungskammer ist. Auch hier kann also der in wenigstens einer Verdrängungskammer vorherrschende sehr hohe Fluiddruck genutzt werden, um die Dichtigkeit zu erhöhen. Die beiden Dichtungsanordnungen können zueinander im Wesentlichen baugleich ausgebildet sein.

Bei einer alternativen Ausgestaltungsart kann vorgesehen sein, dass das ringartige Dichtungselement als offener Ring mit einem Umfangsunterbrechungsbereich ausgebildet ist.

Um auch im Bereich der Umfangsbegrenzungsvorsprünge eine möglichst effiziente Abdichtung zu erlangen, kann vorgesehen sein, dass wenigstens eine zweite Dichtungsanordnung ein in eine radial und axial offene spaltartige Aussparung in einem Umfangsbegrenzungsvorsprung eingesetztes, radial und axial vorgespanntes Dichtungselement umfasst.

Dies kann beispielsweise dadurch erlangt werden, dass das Dichtungselement rahmenartig ausgebildet ist und in dem rahmenartigen Dichtungselement wenigstens ein dieses radial oder/und axial vorspannendes Vorspannelement angeordnet ist.

Der Innenvolumenbereich des rahmenartigen Dichtungselements kann an beiden Seiten durch Abdeckelemente abgeschlossen sein und in wenigstens einem dieser Abdeckelemente kann eine Fluideintrittsöffnung vorgesehen sein. Auch hier kann also dann Fluid aus wenigstens einer Verdrängungskammer in den Innenvolumenbereich gelangen und somit das rahmenartige Dichtungselement nach außen vorspannen.

Wenigstens eine dritte Dichtungsanordnung kann derart ausgebildet sein, dass sie ein in eine Umfangseinsenkung eines Trennkolbens eingesetztes ringartiges Dichtungselement und diesem zugeordnet eine Vorspannanordnung umfasst, durch welche das Dichtungselement nach radial außen gegen eine Innenumfangsfläche des Ausgleichszylinders vorgespannt ist.

Auch im Bereich der wenigstens einen dritten Dichtungsanordnung kann der Fluiddruck des ersten Dämpferfluids zur Dichtungsunterstützung dadurch genutzt werden, dass die Umfangseinsenkung durch wenigstens eine Verbindungsöffnung in Verbindung mit einem erstes Dämpferfluid enthaltenden Raumbereich ist.

Beispielsweise kann vorgesehen sein, dass das ringartige Dichtungselement als offener Ring mit einem Umfangsunterbrechungsbereich ausgebildet ist.

Um auch dann, wenn ein Trennkolben in seiner Bewegungsendlage angeordnet ist, also beispielsweise das Volumen einer Ausgleichskammer maximal oder minimal ist, für eine erhöhte Dichtigkeit sorgen zu können, wird vorgeschlagen, dass in Zuordnung zu wenigstens einer der Bewegungsendlagen eines Trennkolbens die dritte Dichtungsanordnung ein vorzugsweise an dem Ausgleichszylinder vorgesehenes und in der Bewegungsendlage eine Dichtungswirkung zwischen dem Trennkolben und dem Ausgleichszylinder erzeugendes Dichtungselement umfasst.

Die Wirkcharakteristik einer erfindungsgemäßen Torsionsschwingungsdämpferanordnung kann weiterhin dadurch verbessert werden, dass in einem Trennkolben oder/und einem eine Ausgleichskammer in einem Ausgleichszylinder abschließenden Abschlusselement eine zur Ausgleichskammer hin offene Aufnahmeaussparung für in der Ausgleichskammer enthaltenes zweite Dämpferfluid vorgesehen ist. Auf diese Art und Weise ist dafür gesorgt, dass auch bei minimalem Volumen der Ausgleichskammer, also in entsprechender Bewegungsendlage sich befindendem Trennkolben, noch ein gewisses Restvolumen enthalten ist, in welchem das zweite Dämpferfluid im Wesentlichen dann aufgenommen ist. Auf diese Art und Weise kann eine Überhitzung des zweiten Dämpferfluids bei zu starker Kompression vermieden werden.

Weiter kann vorgesehen sein, dass die erste Verdrängungskammerbaugruppe bezüglich der zweiten Verdrängungskammerbaugruppe über eine Lageranordnung drehbar gelagert ist. Dabei hat sich der Einsatz eines Wälzkörperlagers, vorzugsweise Nadellager, als besonders voretilhaft erwiesen, da bei hoher Lagerungspräzision die Entstehung von möglicherweise in Dichtungsanordnungen gelangenden Abriebpartikeln praktisch ausgeschlossen werden kann.

Bei einer alternativen vergleichsweise einfach und kostengünstig zu realisierenden Ausgestaltungsform kann vorgesehen sein, dass die Lageranordnung ein Gleitlager umfasst.

Weiterhin ist es vorteilhaft, wenn die Lageranordnung als ein eine Axialrelativbewegbarkeit der beiden Verdrängungskammerbaugruppen nicht behinderndes Loslager ausgebildet ist. Die Relativpositionierung in Achsrichtung kann dann ohne Beeinträchtigung durch die Lageranordnung im Bereich der beiden ersten Dichtungsanordnungen erfolgen.

Die vorliegende Erfindung wird nachfolgend mit Bezug auf die beiliegenden Figuren detailliert beschrieben. Es zeigt:
- Fig. 1: eine Längsschnittansicht einer nach Art eines Gasfeder-Zweimassenschwungrades aufgebauten Torsionsschwingungsdämpferanordnung;
- Fig. 2: eine Querschnittansicht von Verrdrängungskammern begrenzenden Verdängungskammernbaugruppen;
- Fig. 3: eine Längsschnittansicht der beiden in Fig. 2 erkennbaren Verdrängungskammernbaugruppen, geschnitten längs einer Linie III - III in Fig. 2;
- Fig. 4: eine vergrößerte Detaillansicht eines Ausgleichszylinders;
- Fig. 5: eine der Fig. 4 entsprechende Ansicht einer alternativen Ausgestaltungsart;
- Fig. 6: den oberen Teil eines Ausgleichszylinders;
- Fig. 7: den unteren, also näher im Bereich von Verdrängungskammern positionierten Teil eines Ausgleichszylinders;
- Fig. 8: eine Detailanischt zweier Verdrängungskammerbaugruppen und deren gegenseitige Abdichtung;
- Fig. 9: das im Kreis IX in Fig. 8 enthaltene Detail vergrößert;
- Fig. 10: eine im Bereich eines Umfangsbegrenzungsvorsprungs einzusetzende Dichtungsanordnung;
- Fig. 11: die Dichtungsanordnung der Fig. 10 in Explosionsdarstellung;
- Fig. 12: die Dichtungsanordnung der Fig. 10 im Querschnitt ;
- Fig. 13: eine Teil-Schnittansicht der beiden Verdrängungskammerbaugruppen mit in Umfangsbegrenzungsvorsprüngen vorgesehenen Dichtungsanordnungen;
- Fig. 14: eine Querschnittansicht eines Umfangsbegrenzungsvorsprungs einer zweiten Verdrängungskammerbaugruppe mit einer darin vorge-sehenen Dichtungsanordnung;
- Fig. 15: einen Querschnitt eines Umfangsbegrezungsvorsprungs einer ersten Verdrängungskammerbaugruppe mit einer darin vorgesehenen Dichtungsanordnung;
- Fig. 16: in ihren Darstellungen a) bis m) verschiedene Ausgestaltungen von als Kolbendichtungen ausgebildeten Dichtungsanordnungen;
- Fig. 17: in ihren Darstellungen a) bis i) verschiedenste Ausgestaltungen von als Stangendichtungen ausgebildeten Dichtungsanordnungen.

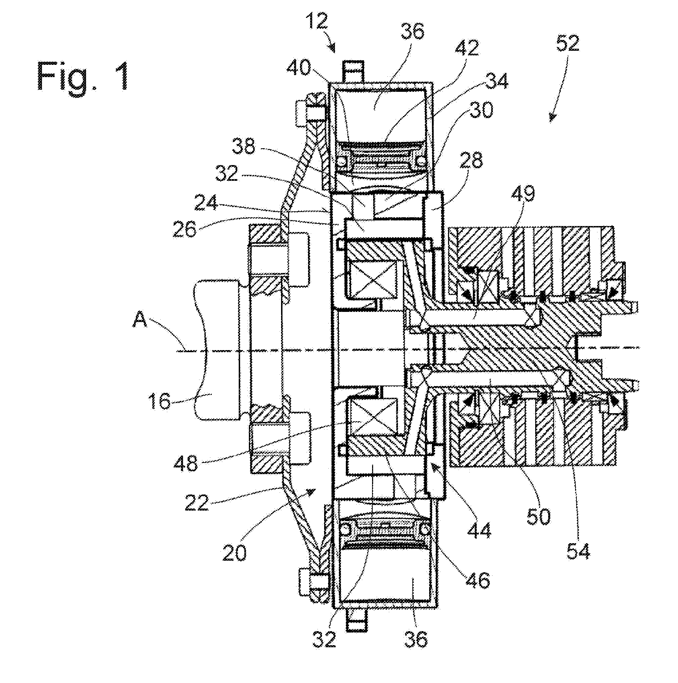

Mit Bezug auf die Fig. 1 wird zunächst allgemein der Aufbau einer auch als Gasfeder-Zweimassenschwungrad bezeichneten Torsionsschwingungsdämpferanordnung 12 beschrieben.

Die Torsionsschwingungsdämpferanordnung 12 umfasst eine Primärseite 20, welche über eine Flexplattenanordnung 22 o. dgl. mit der Antriebswelle 16 zur gemeinsamen Drehung um die Drehachse A gekoppelt bzw. koppelbar ist. Diese Primärseite 20 wiederum umfasst eine erste Verdrängungskammerbaugruppe 24, die mit zwei Stirnwänden 26, 28 und einer Außenumfangswand 30 eine Mehrzahl von in Umfangsrichtung aufeinander folgenden Verdrängungskammern 32 axial und nach radial außen begrenzt. An der Außenseite der Außenumfangswand 30 ist eine bezüglich der Achse A sternförmige Anordnung von Ausgleichszylindern 34 vorgesehen, in welchen jeweils eine Ausgleichskammer 36 gebildet ist. Die Zuordnung kann derart sein, dass jeder Verdrängungskammer 32 eine Ausgleichskammer 36 zugeordnet ist, oder dass einer Verdrängungskammer 32 mehrere Ausgleichskammern 36 zugeordnet sind, oder dass eine Ausgleichskammer 36 mit mehreren Verdrängungskammern 32 zusammenwirkt. Diese Zusammenwirkung erfolgt über eine in Zuordnung zu jeder Verdrängungskammer 32, 33 vorgesehenen Durchgangsöffnung 38 in der Außenumfangswand 30 sowie eine in Umfangsrichtung entlang der Außenumfangswand 28 sich erstreckende Verbindungskammer 40. Ein jeweiliger in dem Ausgleichszylinder 34 bewegbarer Trennkolben 42 trennt das in der bzw. den Verdrängungskammern 32 enthaltene erste Dämpferfluid, das im Wesentlichen nicht kompressibel ist und beispielsweise Öl sein kann, von dem in der zugeordneten Ausgleichskammer 36 enthaltenen zweiten Dämpferfluid, das kompressibel ist, beispielsweise Luft oder ein anderes Gas sein kann.

Eine Sekundärseite 44 der Torsionsschwingungsdämpferanordnung 12 umfasst eine zweite Verdrängungskammerbaugruppe 46, welche über ein Lager 48 an der ersten Verdrängungskammerbaugruppe 24 drehbar gelagert ist. Die zweite Verdrängungskammerbaugruppe 46 begrenzt die Verdrängungskammern 32 nach radial innen und ist über entsprechende Dichtungsanordnungen bezüglich den Seitenwänden 26, 28 fluiddicht geführt.

Um die Verdrängungskammern 32, 33 in Umfangsrichtung zu begrenzen, sind an den beiden Verdrängungskammerbaugruppen 24 bzw. 46 jeweils radial auf die andere Verdrängungskammerbaugruppe zu sich erstreckende Umfangsbegrenzungsvorsprünge vorgesehen, so dass jede Verdrängungskammer 32 durch einen Umfangsbegrenzungsvorsprung der primärseitigen ersten Verdrängungskammerbaugruppe 24 begrenzt ist und einen Umfangsbegrenzungsvorsprung der sekundärseitigen zweiten Verdrängungskammerbaugruppe 46 begrenzt ist. Bei Relativdrehung der Primärseite 20 bezüglich der Sekundärseite 44 in einer ersten Relativdrehrichtung wird beispielsweise das Volumen der in der Fig. 1 oben liegenden Verdrängungskammer 32 verringert, so dass erstes Dämpferfluid aus dieser in die zugeordnete Verbindungskammer 40 verdrängt wird und das zweite Dämpferfluid in einer oder mehreren Ausgleichskammern 36 komprimiert wird, während entsprechend das Volumen einer anderen Verdrängungskammer zunimmt. Bei Relativdrehung in der entgegengesetzten Relativdrehrichtung wird dann das Volumen der anderen Verdrängungskammer verringert, so dass das aus dieser verdrängte erste Dämpferfluid zweites Dämpferfluid in zugeordneten Ausgleichskammern 36 belastet. Es sei darauf hingewiesen, dass selbstverständlich die beiden Verdrängungskammerbaugruppen 24, 46 eine Mehrzahl, beispielsweise vier in Umfangsrichtung aufeinander folgende Verdrängungskammern begrenzen können, von welchen jeweils zwei parallel wirken, also gleichzeitig in ihrem Volumen verringert bzw. vergrößert werden.

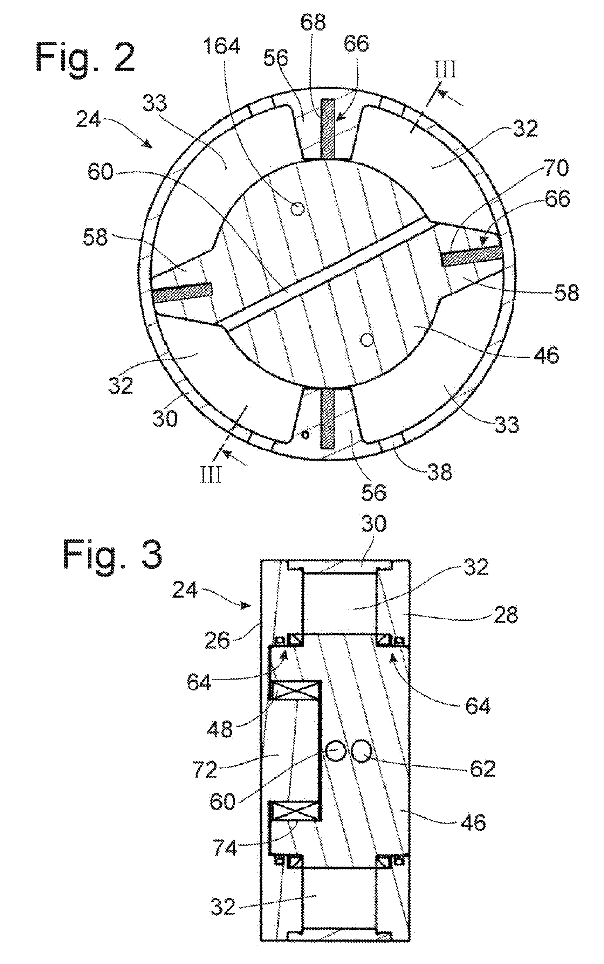

Zur Einstellung der Dämpfungscharakteristik bzw. der Druckverhältnisse des ersten Dämpferfluids in den Verdrängungskammern 32 kann diesen über in den Fig. 1 und 2 erkennbare Kanäle 49, 50 erstes Dämpferfluid zugeführt bzw. von diesen abgezogen werden. Hierzu dient weiterhin eine allgemein mit 52 bezeichnete Drehdurchführung, deren rotierender Teil 54 in Verbindung ist mit der zweiten Verdrängungskammerbaugruppe 46, und deren nicht rotierender Teil 56, in Verbindung mit einer Druckfluidquelle für erstes Dämpferfluid bzw. einem Reservoir ist. Durch hier nicht dargestellte Ventilanordnungen kann dafür gesorgt werden, dass in den verschiedenen Verdrängungskammern 32 der Fluiddruck des ersten Dämpferfluids erhöht bzw. verringert wird, so dass auf diese Art und Weise die Dämpfungscharakteristik beeinflusst werden kann, da auch der Vorspanndruck, welchen das erste Dämpferfluid auf die Trennkolben 42 ausübt, und welche auf das grundsätzlich unter Überdruck bezüglich der Umgebung gehaltene zweite Dämpferfluid in den Ausgleichskammern 36 einwirkt, veränderbar ist.

Die Fig. 2 und 3 zeigen detaillierter den Aufbau der beiden Verdrängungskammerbaugruppen 34, 46. Man erkennt an der Umfangswandung 30 der ersten Verdrängungskammerbaugruppe 34 einander gegenüber liegend, also mit einem Winkelabstand von 180° angeordnet die beiden Umfangsbegrenzungsvorsprünge 56 derselben. Entsprechend erkennt man an der als zentrales Teil ausgebildeten zweiten Verdrängungskammerbaugruppe 46 die von dieser nach radial außen auf die Umfangswandung 30 zu sich erstreckenden und ebenfalls mit einem Umfangsabstand von 180° zueinander angeordneten Umfangsbegrenzungvorsprünge 58. Auf diese Art und Weise sind durch die beiden Verdrängungskammerbaugruppen 24, 46 tatsächlich vier in Umfangsrichtung aufeinander folgende Verdrängungskammern 32, 32, 33, 33 gebildet, die jeweils paarweise zusammenwirken und jeweils auch zwischen einem Paar von Umfangsbegrenzungsvorsprüngen 56, 58 in Umfangsrichtung begrenzt sind. Die paarweise zusammenwirkenden Verdrängungskammern 32, 32 bzw. 33, 33 stehen über Verbindungskanäle 60, 62 in der zweiten Verdrängungskammerbaugruppe 44 in Fluidaustauschverbindung. Je nach Relativdrehrichtung zwischen der Primärseite 20 und der Sekundärseite 44 wird das Volumen der beiden Verdrängungskammern 32 verringert, während das Volumen der beiden Verdrängungskammern 33 zunimmt, oder umgekehrt.

Um im Bereich der gegenseitigen Angrenzung der beiden Verdrängungskammerbaugruppen 24, 46 einen fluiddichten und gegen den ungewollten Austritt von erstem Dämpferfluid gesicherten Abschluss zu erlangen, wirken jeweils zwischen den Stirnwandungen 26, 28 und der zweiten Verdrängungskammer 46 erste Dichtungsanordnungen 64, die, wie dies bereits die Fig. 3 andeutet, zueinander im Wesentlichen baugleich sein und nachfolgend noch detaillierter erläutert werden. Zwischen den jeweiligen Umfangsbegrenzungsvorsprüngen 58 und der jeweils anderen Baugruppe bzw. auch den Umfangsbegrenzungsvorsprüngen 56 und den Stirnwandungen 26, 28 wirken jeweils zweite Dichtungsanordnungen 66. Auch diese zweiten Dichtungsanordnungen 66, die in jeweilige nach radial innen bzw. radial außen offene Aussparungen 68, 70 in den Umfangsbegrenzungsvorsprüngen 56, 58 angeordnet sind, können zueinander im Wesentlichen baugleich sein und werden ebenfalls nachfolgend noch detaillierter erläutert.

Ferner erkennt man in Fig. 3 die Lagerung 48, über welche die beiden Verdrängungskammerbaugruppen 24, 46 bezüglich einander gelagert sind. Die Lagerung 48 wirkt zwischen einem axialen Fortsatz 72 im zentralen Bereich der Stirnwandung 26, welcher in eine entsprechende Aussparung 74 der zweiten Verdrängungskammerbaugruppe 46 eingreifend positioniert ist. Die Lagerung 48 kann beispielsweise als Wälzkörperlager, vorzugsweise Nadellager ausgebildet sein, welches besonders daher vorteilhaft ist, da es die bei der permanenten Hin- und Herdrehbewegung vergleichsweise kleinen Drehwinkelbereichen auftretenden Belastungen besonders gut aufnehmen kann. Weiterhin ist vorzugsweise vorgesehen, dass die Lagerung 48 als so genanntes Loslager ausgebildet ist, also zwar eine radiale Abstützung der beiden Verdrängungskammerbaugruppen 24, 46 bezüglich einander realisiert, diese jedoch nicht axial bezüglich einander arretiert. Diese axiale Arretierung bzw. definierte axiale Positionierung bezüglich einander erfolgt dann im Wesentlichen durch die beiden ersten Dichtungsanordnungen 64, und zwar ohne dass durch eine Überbestimmung Zwängungen erzeugt werden. Beispielsweise kann vorgesehen sein, dass auf den Ansatz 72 ein Nadellagerinnenring aufgesetzt wird und die Wälzkörper dieses Nadellagers dann an einer Innenumfangsfläche der Aussparung 74 abrollen. Auch eine umgekehrte Anordnung mit in die Aussparung 74 eingreifend positionierten Nadellagerring kann vorgesehen sein. Diejenigen Oberflächen, welche mit den Wälzkörpern bei Abrollbewegung derselben zusammenwirken, können beispielsweise durch Härtung gegen einen übermäßigen Verschleiß geschützt werden.

Alternativ ist es selbstverständlich auch möglich, ein so genanntes Festlager einzusetzen, also ein Lager, bei welchem die beiden miteinander gekoppelten Baugruppen auch axial bezüglich einander festgelegt sind. Eine Überbestimmung bzw. das Vermeiden von Zwängungen kann dadurch vermieden werden, dass bei der Montage eine der Stirnwandungen oder auch beide der Stirnwandungen 26, 28 bezüglich der Außenumfangswandung 30 bewegbar gehalten sind und erst nach dem Zusammenfügen mit dieser dann fest verbunden werden. Auch der Einsatz von Unterlegringen o.dgl. ist denkbar. Grundsätzlich sei betont, dass auch der Einsatz eines Gleitlagers an Stelle eines Wälzkörperlagers vorgesehen sein kann.

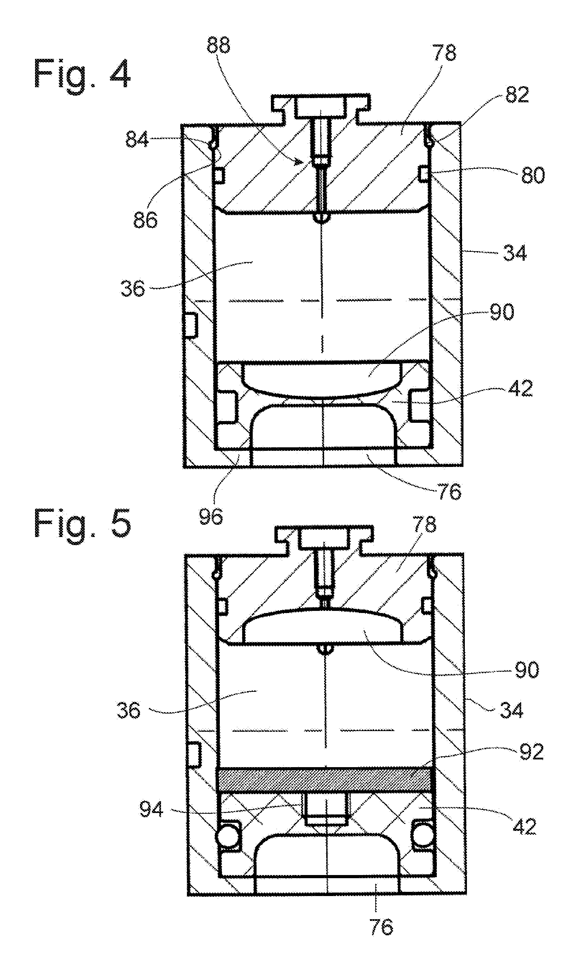

Die Fig. 4 zeigt detailliert eine Ausgestaltung eines Ausgleichszylinders 34 mit der darin gebildeten Ausgleichskammer 36 und dem Trennkolben 42. Am Außenumfang der ersten Verdrängungskammerbaugruppe 24 können mehrere derartige Ausgleichszylinder 34 in sternartiger Konfiguration beispielsweise auch in einer Baugruppe vorgesehen sein.

In ihrem radial innen zu positionieren und mithin an die erste Verdrängungskammerbaugruppe 24 angrenzenden Bereich weisen die Ausgleichszylinder 34 eine Öffnung 76 auf, über welche in die Verbindungskammer 40 verdrängtes erstes Dämpferfluid eintreten und somit die von der Ausgleichskammer 36 entfernt liegende Rückseite des Trennkolbens 42 belasten kann. Am anderen, also radial weiter außen zu positionierenden Endbereich ist der Ausgleichszylinder 34 durch ein Verschlusselement 78 abgeschlossen. Dieses kann beispielsweise in einer Außenumfangsnut 80 ein Dichtungselement tragen, welches einen fluiddichten Abschluss zum Ausgleichszylinder 34 herstellt. Die Fixierung des Verschlusselements 78 kann über einen in eine Innenumfangsnut des Ausgleichszylinders 34 eingesetzten Sicherungsring 82 erfolgen. Dieser kann eingesetzt werden, nachdem das Verschlusselement 78 weiter in den Innenbereich des Ausgleichszylinders 34 geschoben worden ist und zunächst nicht in Überlappung mit einer den Sicherungsring 82 aufnehmenden Innenumfangsnut 84 am Ausgleichszylinder 34 ist. Daraufhin kann das Verschlusselement 78 dann wieder nach außen, in der Fig. 4 also nach oben, gezogen werden, bis eine daran vorgesehene Schulter 86 in Anlage an dem Sicherungsring 82 ist. Die Befüllung der Ausgleichskammer 36 kann über eine Öffnungs/Ventil-Anordnung 88 im Verschlusselement 78 erfolgen.

Um dafür zu sorgen, dass auch bei maximaler Belastung des in der Ausgleichskammer 36 enthaltenen, kompressiblen zweiten Dämpferfluids, also dann, wenn der Trennkolben 42 nicht in seiner untersten Bewegungsendstellung mit maximalem Volumen der Ausgleichskammer 36, sondern beispielsweise in unmittelbarer Anlage am Verschlusselement 78 und somit seiner anderen Bewegungsendstellung ist, das zweite Dämpferfluid nicht übermäßig komprimiert wird, weist der Trennkolben 42 an seiner der Ausgleichskammer 36 zugewandten Seite eine Einsenkung 90 auf, in welcher sich das zweite Dämpferfluid in diesem Zustand dann ansammeln kann, und zwar unter vergleichsweise hohem Druck. Eine weitere Kompression ist dann jedoch nicht mehr möglich, so dass eine Überlastung bzw. auch eine Überhitzung durch zu starke Kompression des zweiten Dämpferfluids vermieden werden kann. Dies kann tatsächlich zu einem Zustand führen, in welchem der Druck im ersten Dämpferfluid deutlich über dem Druck im zweiten Dämpferfluid liegt.

Bei der in der Fig. 5 gezeigten alternativen Ausgestaltungsvariante ist die Aussparung 90 im Verschlusselement 78 vorgesehen. Am Trennkolben 42 ist hier eine diesen zur Ausgleichskammer 36 hin überdeckende Lage 92, beispielsweise aus elastischem Material vorgesehen, welche dafür sorgt, dass der Trennkolben 42 nicht schlagartig am Verschlusselement 78 abgebremst wird, sondern einen sanften Übergang in die Bewegungsendstellung ermöglicht.

Weiterhin erkennt man in Fig. 5 am Trennkolben 42 an seiner dem Verschlusselement 78 zugewandten Seite eine Innengewindeöffnung 94. In diese kann zum Herausnehmen eines Trennkolbens 42 ein Werkzeug eingeschraubt werden, nachdem das Verschlusselement 78 und die Lage 92 entfernt worden sind.

Man erkennt in den Fig. 4 und 5 weiter, dass an den Ausgleichszylindern 34 die Öffnung 76 umgebend ein ringartiger Abschnitt 96 vorgesehen ist. Dieser sorgt dafür, dass bei fehlender Belastung durch das erste Dämpferfluid oder dann, wenn der Druck im ersten Dämpferfluid unter dem Druck des zweiten Dämpferfluids liegt, eine Anlage für den Trennkolben 42 geschaffen ist und dieser sich nicht aus dem Ausgleichszylinder 34 hinausbewegen kann. Diese Anlage 96 kann als integraler Bestandteil des Ausgleichszylinders 34 vorgesehen sein, kann jedoch auch als in diesen einzusetzender Sicherungsring o. dgl. realisiert sein.

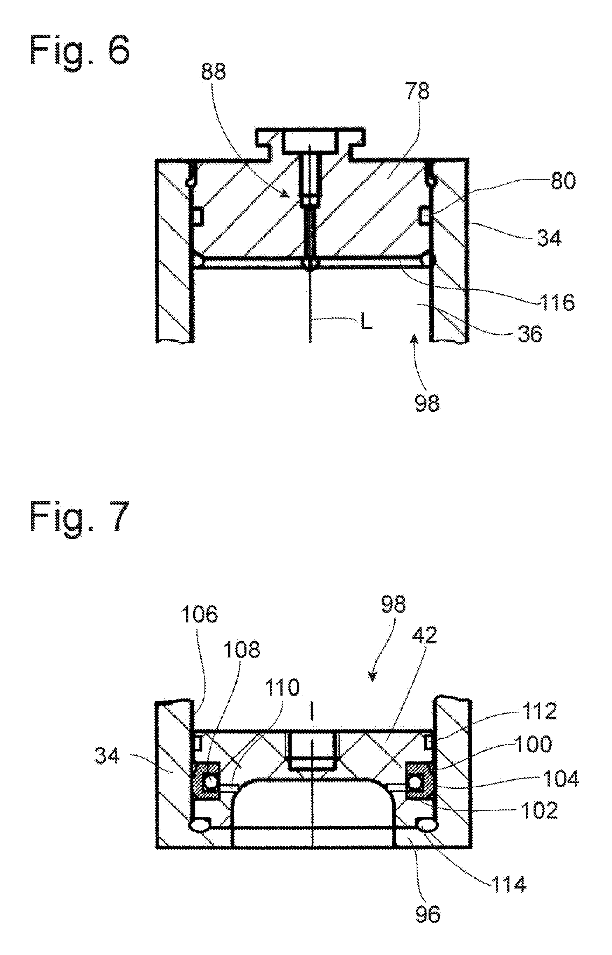

Die Fig. 6 und 7 zeigen jeweils Teilaspekte einer dritten Dichtungsanordnung 98, durch welche der fluiddichte Abschluss des Trennkolbens 42 bezüglich der Ausgleichskammer 36 bzw. auch zu den Verdrängungskammern 32, 33 realisiert wird. Als wesentlichen Bestandteil umfasst diese dritte Dichtungsanordnung 98 ein ringartiges Dichtungselement 100, das in eine Außenumfangsnut 102 des Trennkolbens 42 eingesetzt ist. Dieses beispielsweise als Kunststoffring mit guten Gleiteigenschaften ausgebildete Dichtungselement 100 liegt mit einem Dichtflächenbereich 104 an der Innenoberfläche 106 des Ausgleichszylinders 34 an. Um hier eine Anlage unter Druck zu erhalten, kann ein beispielsweise als Gummi-O-Ring ausgebildetes Vorspannelement 108 eine nach radial außen gerichtete Kraft erzeugt werden.

Man erkennt in Fig. 7 weiter mehrere zur Rückseite, also der von der Ausgleichskammer 36 entfernten Seite, des Trennkolbens 42 führende Öffnungen bzw. Kanäle 110 die auch zum Bodenbereich der Umfangsnut 102 offen sind. Über diese Kanäle 110 ist diese Umfangsnut 102 also in Verbindung mit einem Volumenbereich, der bisweilen unter hohem Druck stehendes erstes Dämpferfluid enthält. Dieses beaufschlagt über die Kanäle 110 auch die von der Innenumfangsfläche 106 des Ausgleichszylinders 34 abgewandte Rückseite des Dichtungselements 100 und presst dieses somit verstärkt nach radial außen - radial bezogen auf die Längsmittenachse L des Ausgleichszylinders 34 -, um somit die Dichtwirkung noch weiter zu verstärken.

In einer weiteren Umfangsnut 112 des Trennkolbens 42 kann ein als Kunststoff- oder Metallring gebildetes Führungselement vorgesehen sein, das alternativ oder zusätzlich zur Außenumfangsfläche des Trennkolbens 42 eine Führungsfunktion für diesen im Ausgleichszylinder realisieren kann.

Ein O-ringartiges Dichtungelement 114 ist im Übergangsbereich der ringartigen Anlage 96 zum Ausgleichszylinder 34 vorgesehen. Dieses Dichtungselement 114 ist dann wirksam, wenn der Trennkolben 42 in seiner unteren Bewegungsendstellung ist, also beispielsweise der Druck des zweiten Dämpferfluids in der Ausgleichskammer 36 über den Druck des ansonsten auch den Trennkolben 42 beaufschlagenden ersten Dämpferfluids ist. Da in einer derartigen Phase die Druckunterstützung für das Dichtungselement 100 geringer bzw. nicht vorhanden ist, sorgt das Dichtungselement 114 in dieser Phase für eine verstärkte Dichtwirkung. Es sei darauf hingewiesen, dass das Dichtungselement 114 alternativ auch am Trennkolben 42 vorgesehen sein kann und sich mit diesem bewegen kann.

Auch für die andere Bewegungsendlage des Trennkolbens 42 ist ein O-ringartiges Dichtungselement 116 vorgesehen, das im Übergangsbereich vom Ausgleichszylinder 34 zum Verschlusselement 78 angeordnet ist. Ist der Trennkolben 42 also durch entsprechend hohen Druck des ersten Dämpferfluids in seine obere Bewegungsendlage verschoben, so wird durch das Dichtungselement 116 ein verstärkter Abschluss gegen Austritt von dann unter sehr hohem Druck stehendem zweiten Dämpferfluid erhalten. Auch dieses Dichtungselement 116 könnte alternativ am Trennkolben 42 vorgesehen sein.

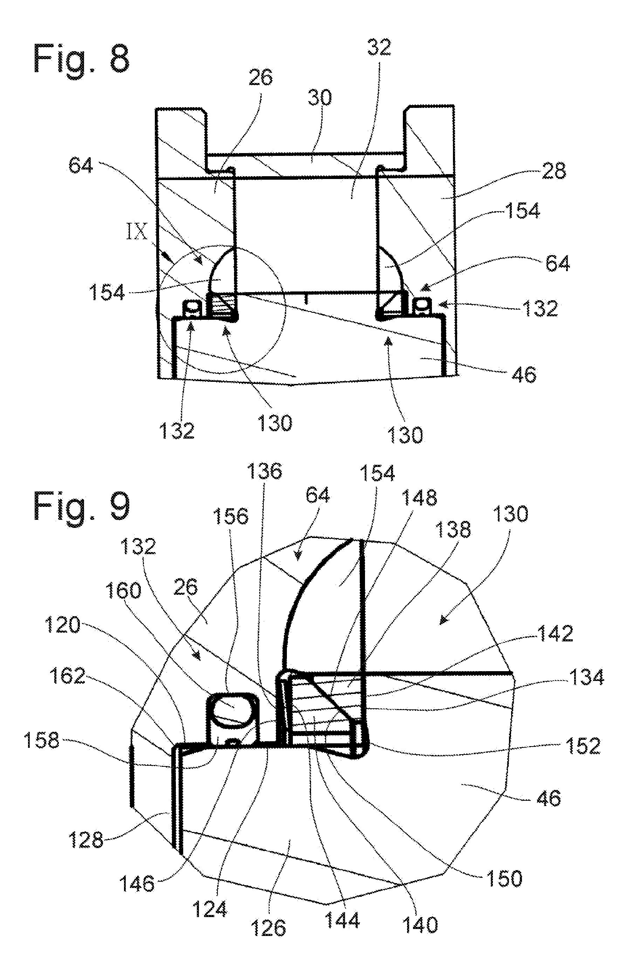

Die Fig. 8 und 9 zeigen detaillierter die Ausgestaltung der beiden vorangehend mit Bezug auf die Fig. 3 bereits angesprochenen ersten Dichtungsanordnungen 64. Diese sind grundsätzlich baugleich und werden daher im Folgenden detaillierter mit Bezug auf die vergrößerte Darstellung der Fig. 9 anhand der links, also beispielsweise von der Drehdurchführung 52 abgewandt positionierten ersten Dichtungsanordnung 64 erläutert.

Man erkennt zunächst, dass die Stirnwandung 26 eine Innenumfangsfläche 120 bereitstellt, die im Wesentlichen zylindrisch geformt ist und einer entsprechenden Außenumfangsfläche 124 der zweiten Verdrängungskammerbaugruppe 46 gegenüber liegt. Im Bereich eines diese Außenumfangsfläche 124 aufweisenden Abschnitts 126, der auch die Aussparung 74 bildet, greift also die zweite Verdrängungskammerbaugruppe 46 in eine im Wesentlichen ringartige Aussparung 128 der Stirnwandung 26 ein. Die erste Dichtungsanordnung 64 ist dabei zweistufig ausgebildet mit zwei Dichtungsbereichen 130, 132. Der erste Dichtungsbereich 130 wirkt dabei zwischen zwei einander axial gegenüber liegenden Seitenflächen 134 der zweiten Verdrängungskammerbaugruppe 36 und 136 der Stirnwandung 26. Dabei ist zu erkennen, dass die Seitenfläche 134 an der zweiten Verdrängungskammerbaugruppe 46 radial innerhalb der daran vorgesehenen Umfangsbegrenzungsvorsprünge 58 liegt bzw. sich bis zu deren radialen Bereich nach radial außen erstreckt.

Der erste Dichtungsbereich 130 umfasst zwei Dichtungsringe 138, 140. Der erste Dichtungsring 138 liegt mit einer ersten Abstützfläche 142 an der Seitenfläche 134 der zweiten Verdrängungskammerbaugruppe 46 an, wobei diese aneinander anliegenden Flächen sich vorzugsweise orthogonal zur Drehachse A erstrecken. Eine Vorspannfeder 146 stützt sich an der Seitenfläche 136 der Stirnwandung 26 einerseits und der ersten Abstützfläche 144 des zweiten Dichtungsrings 140 ab und belastet diesen somit in Richtung auf den ersten Dichtungsring 138 zu. Die Vorspannfeder 146 kann beispielsweise als Tellerfeder oder Wellfeder ausgebildet sein. Die beiden Dichtungsringe 138, 140 liegen über jeweilige zweite Abstützflächen 148 und 150 aneinander an, wobei diese beiden Abstützflächen bezüglich der Drehachse A im Wesentlichen konisch schräg gestellt verlaufen, so dass der zweite Dichtungsring 140 durch die Vorspannfeder 146 keilartig in den ersten Dichtungsring 138 gepresst wird und diesen dadurch auch radial zentriert bzw. nach außen belastet.

Grundsätzlich kann vorgesehen sein, dass bei Relativdrehung zwischen der Primärseite und der Sekundärseite der erste Dichtungsring 138 mit seiner ersten Abstützfläche 142 sich reibend bezüglich der Seitenfläche 134 bewegt. Um hier zusätzlich eine Reibung des zweiten Dichtungsrings zu vermeiden, kann die zweite Verdrängungskammerbaugruppe 46 radial innerhalb ihrer Seitenfläche 134 mit einer axialen Einbuchtung 152 ausgebildet sein, so dass ausgehend von der Seitenfläche 134 ein Versatz nach hinten, also in Richtung vom zweiten Dichtungsring 140 weg realisiert ist.

Bei einer alternativen Variante kann durch entsprechende Auswahl der Reibpartner, also deren Materialien, dafür gesorgt sein, dass der erste Dichtungsring 138 sich zusammen mit der zweiten Verdrängungskammerbaugruppe 46 dreht und somit die beiden zweiten Abstützflächen 148, 150 aneinander abgleiten. Dies bringt den Vorteil mit sich, dass eine gegenseitige Beeinträchtigung zwischen dem ersten Dichtungsring 138 und den noch zu beschreibenden zweiten Dichtungsanordnungen 66 vermieden werden kann, welche ansonsten sich bezüglich einander in Umfangsrichtung sich bewegen würden.

An der Stirnwandung 26 kann im Bereich eines oder auch im Bereich beider Umfangsbegrenzungsvorsprünge 56, beispielsweise exakt dort, wo diese die nach radial innen offenen Aussparungen aufweisen, ein kerbenartiger Einschnitt 154 gebildet sein. Dieser kann eine Fluidverbindung zwischen zumindest einer der Verdrängungskammern 32, 33 beidseits des jeweiligen Umfangsbegrenzungsvorsprungs 56, der an der Umfangswandung 30 gebildet ist, und der zweiten Abstützfläche 144 des zweiten Dichtungsrings 140 erzeugen. Der hohe Druck des ersten Dämpferfluids kann somit den zweiten Dichtungsring 140 im Bereich seiner nur teilweise durch die Vorspannfeder 146 überdeckten ersten Abstützfläche 144 belasten und somit zu einer verstärkten Anpressung der beiden Dichtungsringe 138, 140 beitragen.

Der zweite Dichtungsbereich 132 umfasst einen in einer nach radial innen offenen Umfangsnut 156 angeordneten Dichtungsring 158, der beispielsweise nach Art eines Rotoglydrings aufgebaut sein kann. Ein an dessen Rückseite angeordnetes Vorspannelement 160, beispielsweise ein Gummi-O-Ring, kann den Dichtungsring 158 nach radial innen auf die Außenumfangsfläche 124 zu belasten. Um beim Zusammenbau der beiden Verdrängungskammerbaugruppen 24, 46 eine Beschädigung dieses Dichtungsrings zu vermeiden, kann der Abschnitt 126 mit einer beispielsweise konischen Einführschräge 162 ausgebildet sein, so dass ein scharfkantiger Kontakt mit dem Dichtungsring 158 vermieden wird.

Auch bei dem zweiten Dichtungsbereich 132 kann der Fluiddruck des ersten Dämpferfluids genutzt werden, wenn beispielsweise durch eine kanalartige Verbindung zwischen demjenigen Bereich, in welchem der erste Dichtungsbereich 130 liegt, und der Nut 156 geschaffen ist. Das in diesen Bereich gelangende erste Dämpferfluid kann den Dichtungsring 158 von seiner Rückseite her belasten und somit zu einem verstärkten Anpressen führen.

Erstes Dämpferfluid, welches über die beiden Dichtungsbereiche 130, 132 hinweg gelangt ist, kann über mehrere in der Fig. 2 erkennbare in der zweiten Verdrängungskammerbaugruppe 46 vorgesehene Leckagekanäle 164 in Richtung zur Drehdurchführung bzw. einem Sumpf für das erste Dämpferfluid geleitet werden.

Es sei darauf hingewiesen, dass selbstverständlich die verschiedenen Dichtungselemente, her also die Dichtungsringe 138, 140 und 158 jeweils aus für die auftretenden Anforderungen optimalen Materialien, wie z.B. Kunststoffmaterialien, ausgewählt werden können, die im Vergleich zu den jeweils vorhandenen Reibpartnern dann den gewünschten Reibbeiwert bereitstellen.

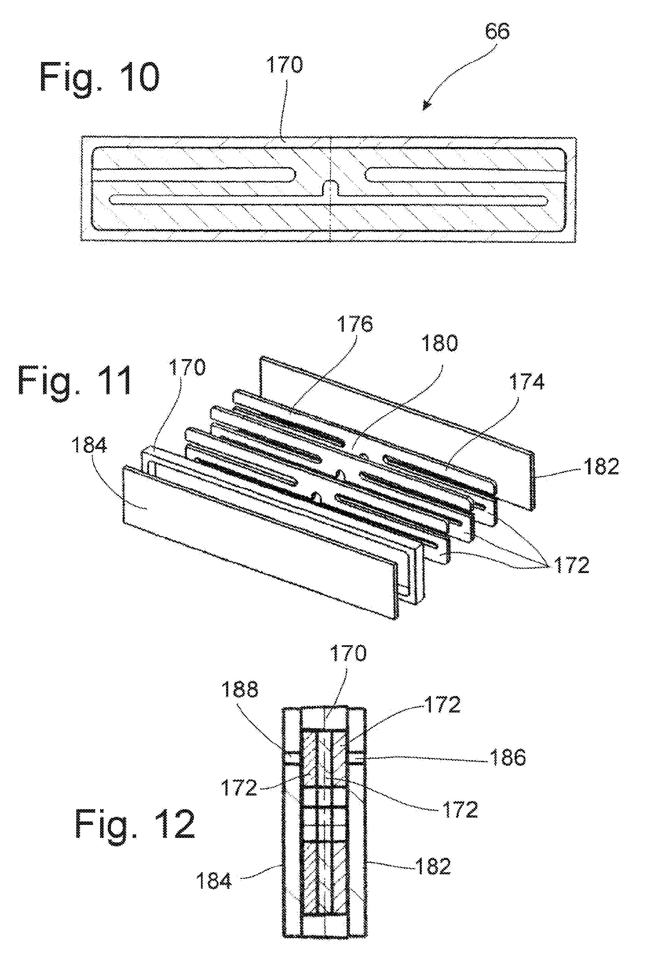

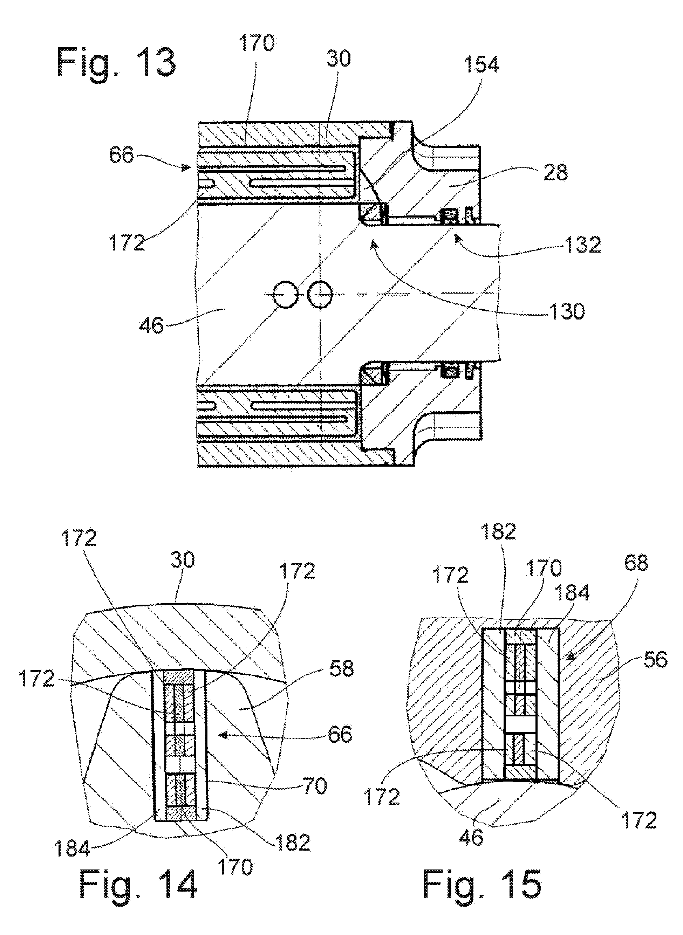

Mit Bezug auf die Fig. 10 bis 15 wird nachfolgend der Aufbau der im Bereich der Umfangsbegrenzungsvorsprünge 56, 58 vorgesehenen zweiten Dichtungsanordnungen 66 beschrieben. Es sei hier darauf hingewiesen, dass die sowohl in den Umfangsbegrenzungsvorsprüngen 56 der ersten Verdrängungskammerbaugruppe 24 und die in den Umfangbegrenzungsvorsprüngen 58 der zweiten Verdrängungskammerbaugruppe 46 vorgesehenen zweiten Dichtungsanordnungen 66 grundsätzlich baugleich sein können.

Zur Aufnahme dieser zweiten Dichtungsanordnung 66 weisen die Umfangsbegrenzungsvorsprünge 56, 58 jeweils nach radial innen bzw. radial außen offene Aussparungen 68 bzw. 70 auf, die vorangehend bereits erläutert wurden und die auch in beiden axialen Richtungen offen sind, um auch dort einen fluiddichten Abschluss bezüglich der beiden Stirnwandungen 26, 28 zu erlangen, insbesondere auch bei den bezüglich der Stirnwandungen 26, 28 sich nicht bewegenden Umfangsbegrenzungsvorsprüngen 56 der ersten Verdrängungskammerbaugruppe 24.
Jede dieser Dichtungsanordnungen 66 umfasst als Dichtungselement 170 einen im Wesentlichen rechteckigen Rahmen, der so dimensioniert ist, dass er sowohl in radialer Richtung als auch in axialer Richtung geringfügig über die Aussparungen 68, 70 übersteht. In dem von dem rahmenartigen Dichtungselement 170 umschlossenen Raumbereich sind im dargestellten Beispiel drei beispielsweise aus Blech- oder Kunststoffmaterial aufgebaute Vorspannelemente 172 angeordnet, die zueinander im Wesentlichen baugleich sein können. Diese Vorspannelemente 172 weisen mehrere Balkenabschnitte 174, 176 bzw. 180 auf, die so geformt sind, dass diese bei in das rahmenartige Dichtungselement 170 eingesetzter Positionierung dieses nach außen aufspreizen. Beidseits des rahmenartigen Dichtungselements 170 liegen Abdeckplatten 182, 184. Diese schließen den von dem rahmenartigen Dichtungselement 170 umschlossenen Volumenbereich, in welchem auch die drei Vorspannelemente 172 liegen, ab und erzeugen somit auch die Abstützung bezüglich der die Aussparungen 68, 70 begrenzenden Wandungen. Man erkennt in Fig. 12, dass in jeder dieser Abdeckplatten 182, 184 zumindest eine Öffnung 186, 188 gebildet ist. Durch diese Öffnungen hindurch steht der Innenvolumenbereich in Verbindung mit den beidseits eines jeweiligen Umfangsbegrenzungsvorsprungs 56 bzw. 58 angeordneten Verdrängungskammern 32, 33, und zwar über die auch im Bereich der Aussparungen 68, 70 bezüglich der Abdeckplatten 182, 184 gebildeten spaltartigen Zwischenräume. Somit kann der Druck des ersten Dämpferfluids auch im Innenvolumenbereich des rahmenartigen Dichtungselements 170 wirken und dieses nach außen vorspannen, so dass es sowohl in axialer als auch in radialer Richtung aus den jeweiligen Aussparungen 68, 70 herauspresst wird und zwar in Anlage gegen die Stirnwandungen 26, 28 und in radialer Richtung gegen die jeweils andere Verdrängungskammerbaugruppe.

Die Positionierung der zweiten Dichtungsanordnungen 66 in radialer Richtung ist so gewählt, dass sie möglichst nahe an den Außenumfang der ersten Dichtungsanordnungen 64 heranreichen, um hier möglichst keine Zwischenräume entstehen zu lassen, über welche ein Druckausgleich zwischen den verschiedenen Verdrängungskammern stattfinden könnte. Um eine möglichst gute Passung zu erlangen, kann so vorgegangen werden, dass zunächst die zweiten Dichtungsanordnungen und auch die weiteren Komponenten in die verschiedenen Verdrängungskammerbaugruppen eingesetzt werden, wie sie dann zusammenmontiert werden und dann durch Tempern eine Formanpassung der jeweiligen Dichtungsanordnungen erzielt wird.

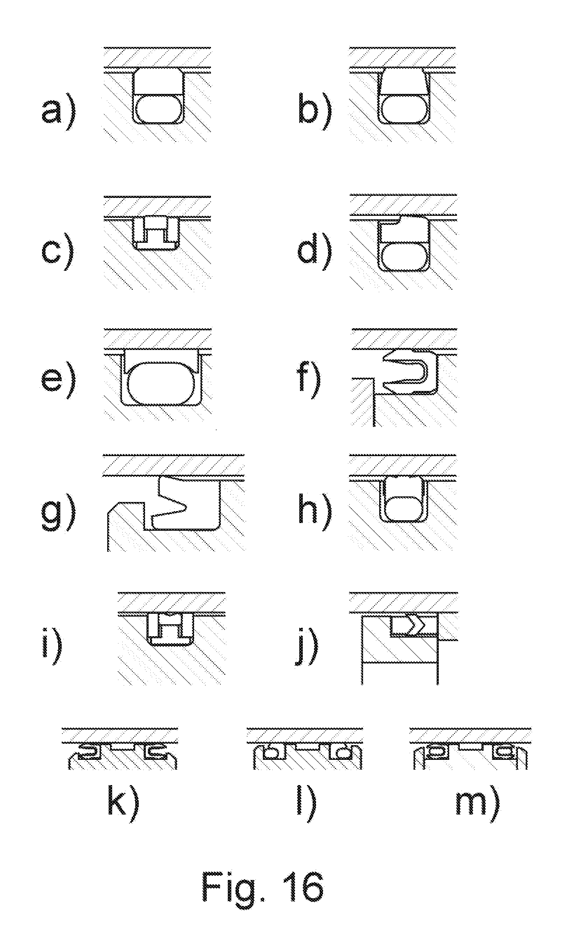

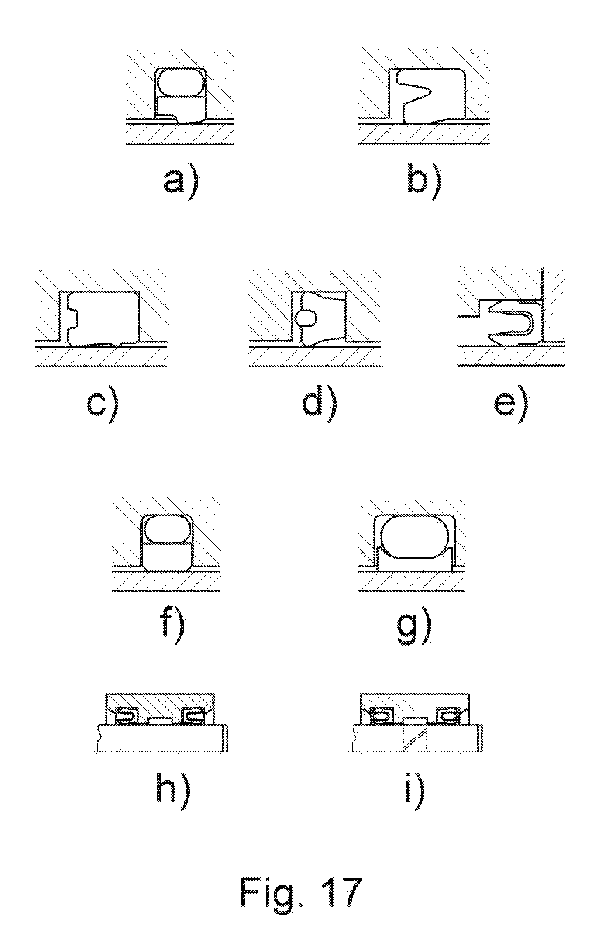

Die Fig. 16 und 17 zeigen in verschiedensten Konfigurationen jeweils als so genannte Kolbendichtungen (Fig. 16) bzw. Stangendichtungen (Fig. 17) ausgebildete Dichtungsformationen mit jeweiligen Dichtungsringen, die in Nuten bzw. Einsenkungen aufgenommen sind und durch zugeordnete Vorspannelemente oder auch alternativ oder zusätzlich Fluiddruck in ihre Dichtpositionierung vorgespannt sind. Es sei mit Bezug auf diese Darstellungen ausgeführt, dass alle diese Dichtungsformationen insbesondere im Bereich des Trennkolbens 42, also als Teilbereiche der dritten Dichtungsanordnungen 98, als auch im Bereich der ersten Dichtungsanordnungen, dort insbesondere im Bereich jeweils des zweiten Dichtungsbereichs 132 vorgesehen sein können.

Vorangehend sind mit Bezug auf die ersten Dichtungsanordnungen 68, insbesondere deren zweite Dichtungsbereiche 132, und auch mit Bezug auf die dritten Dichtungsanordnungen 98 jeweils Dichtungselemente mit ringartig geschlossener Struktur beschrieben worden. Es ist selbstverständlich, dass in diesen Dichtungsanordnungen, insbesondere den zweiten Dichtungsbereichen 132 der ersten Dichtungsanordnungen 64, auch offene ringartige Dichtungselemente eingesetzt werden können, also Dichtungselemente, die in einem Umfangsbereich unterbrochen sind und somit auch auf Grund ihrer materiellen Elastizität in radialer Richtung flexibel sein können. Derartige Dichtungselemente sind im Allgemeinen aus Kunststoffmaterial aufgebaut und weisen in ihren in Umfangsrichtung einander benachbart liegenden Ringendbereichen Schlossformationen auf, die trotz der offenen ringartigen Gestaltung einen dichten Abschluss ermöglichen. Derartige offene ringartige Dichtungselemente können in den diese aufnehmenden Nuten radial vorgespannt angeordnet sein, also im Falle der beispielsweise in den Fig. 8 und 9 erkennbaren zweiten Dichtungsbereiche 132 nach radial außen bzw. vorteilhafterweise nach radial innen vorgespannt sein, so dass insbesondere bezüglich der Außenumfangsfläche 124 des jeweiligen Abschnitts 126 ein im Wesentlichen fluiddichter Anlagekontakt erzeugt wird. Der einseitig, also in Fig. 9 dann von rechts auf ein derartiges Dichtungselement einwirkende Fluiddruck presst dieses gegen eine Seitenwandung der Nut und erzeugt damit auch einen im Wesentlichen fluiddichten Abschluss bezüglich der diese Nut aufweisenden Stirnwandung 26. Derartige mit offener ringartiger Struktur ausgebildete Dichtungselemente können mit verschiedensten Querschnittsgestaltungen, beispielsweise mit dreieckigem, rechteckigem, vieleckigem oder auch rundem Querschnitt, ausgebildet sein.

Abschließend sei darauf hingewiesen, dass selbstverständlich die verschiedenen vorangehend besprochenen Aspekte in beliebiger Kombination realisiert sein können. So können alle Dichtungsanordnungen so wie vorangehend erläutert aufgebaut sein. Selbstverständlich ist es auch möglich, beispielsweise nur die ersten Dichtungsanordnungen so wie beschrieben auszugestalten, während für die zweiten und dritten Dichtungsanordnungen andere Ausgestaltungen gewählt werden. Enstprechendes gilt selbstverständlich auch für die Ausgestaltung der Ausgleichszylinder, wie sie mit Bezug auf die Fig. 4 und 5 detailliert erläutert wurden, und die Lagerung, über welche die beiden Verdrängungskammerbaugruppen bezüglich einander zur Drehung gelagert sind.

## Patentansprüche

1. Torsionsschwingungsdämpferanordnung, umfassend eine Primärseite (20) und eine gegen die Wirkung einer Dämpferfluidanordnung um eine Drehachse (A) bezüglich der Primärseite (20) drehbare Sekundärseite (44), wobei die Dämpferfluidanordnung in wenigstens einer Verdrängungskammer (32, 33) ein erstes Dämpferfluid mit geringerer Kompressibilität und in wenigstens einer Ausgleichskammer (36) ein zweites Dämpferfluid mit höherer Kompressibilität aufweist, wobei bei durch Drehung der Primärseite (20) bezüglich der Sekundärseite (44) ausgelöster Verringerung des Volumens wenigstens einer Verdrängungskammer (32, 33) und dabei Verdrängung von Fluid aus dieser das zweite Dämpferfluid in wenigstens einer Ausgleichskammer (36) komprimiert wird, wobei:
- die wenigstens eine Verdrängungskammer (32, 33) begrenzt ist durch eine erste Verdrängungskammerbaugruppe (24), welche die wenigstens eine Verdrängungskammer (32, 33) mit Stirnwandungen (26, 28) in beiden axialen Richtungen und mit einer Umfangswandung (30) in einer radialen Richtung begrenzt, und durch eine zweite Verdrängungskammerbaugruppe (46), welche bezüglich der ersten Verdrängungskammerbaugruppe (24) um die Drehachse (A) drehbar ist und die wenigstens eine Verdrängungskammer (32, 33) in der anderen radialen Richtung begrenzt, wobei zwischen den beiden Stirnwandungen (26, 28) und der zweiten Verdrängungskammerbaugruppe (46) wirkende erste Dichtungsanordnungen (64, 64) zur Erzeugung eines im Wesentlichen fluiddichten Abschlusses der wenigstens einen Verdrängungskammer (32, 33) vorgesehen sind,
oder/und
- die erste Verdrängungskammerbaugruppe (24) in Zuordnung zu der wenigstens einen Verdrängungskammer (32, 33) einen radial auf die zweite Verdrängungskammerbaugruppe (46) zu sich erstreckenden ersten Umfangsbegrenzungsvorsprung (56) aufweist, welcher die wenigstens eine Verdrängungskammer (32, 33) in einer ersten Umfangsrichtung begrenzt, und die zweite Verdrängungskammerbaugruppe (46) in Zuordnung zu der wenigstens einen Verdrängungskammer (32, 33) einen auf die Umfangswandung (30) der ersten Verdrängungskammerbaugruppe (24) zu sich erstreckenden zweiten Umfangsbegrenzungsvorsprung (58) aufweist, welcher die wenigstens eine Verdrängungskammer (32, 33) in einer zweiten Umfangrichtung begrenzt, wobei an den Umfangsbegrenzungsvorsprüngen (56, 58) zwischen diesen und der jeweils anderen Verdrängungskammerbaugruppe wirkende zweite Dichtungsanordnungen (66) zur Erzeugung eines im Wesentlichen fluiddichten Abschlusses der wenigstens einen Verdrängungskammer (32, 33) vorgesehen sind,
- oder/und
- die wenigstens eine Ausgleichskammer (36) in einem Ausgleichszylinder (34) gebildet ist, in welchem ein Trennkolben (42) bewegbar ist, welcher das erste Dämpferfluid vom zweiten Dämpferfluid trennt, wobei eine zwischen dem Trennkolben (42) und dem Ausgleichszylinder (34) wirkende dritte Dichtungsanordnung (98) zur Erzeugung eines im Wesentlichen fluiddichten Abschlusses der wenigstens einen Ausgleichskammer (36) vorgesehen ist.

2. Torsionsschwingungsdämpferanordnung nach Anspruch 1,
**dadurch gekennzeichnet, dass** wenigstens eine erste Dichtungsanordnung (64) zweistufig ausgebildet ist mit einem ersten Dichtungsbereich (130), welcher im Wesentlichen zwischen einer axialen Seite (136) einer Stirnwandung (26, 28) und einer axialen Seite (134) der zweiten Verdrängungskammerbaugruppe (46) wirkt, und einem zweiten Dichtungsbereich (132), welcher im Wesentlichen zwischen einer Umfangsfläche (120) der Stirnwandung (26, 28) und einer der Umfangsfläche (120) der Stirnwandung (26, 28) radial gegenüber liegenden Umfangsfläche (124) der zweiten Verdrängungskammerbaugruppe (46) wirkt.

3. Torsionsschwingungsdämpferanordnung nach Anspruch 2,
**dadurch gekennzeichnet, dass** der erste Dichtungsbereich (130) ein erstes ringartiges Dichtungselement (138) umfasst, welches mit einer ersten Abstützfläche (142) bezüglich der zweiten Verdrängungskammerbaugruppe (46) abgestützt ist, und ein zweites Dichtungselement (140) umfasst, welches mit einer ersten Abstützfläche (144) über ein Vorspannelement (146) bezüglich der Stirnwandung (26, 28) abgestützt ist, wobei die beiden Dichtungselemente (138, 140) mit jeweiligen zweiten Abstützflächen (148, 150) aneinander abgestützt sind.

4. Torsionsschwingungsdämpferanordnung nach Anspruch 3,
**dadurch gekennzeichnet, dass** wenigstens eine der ersten Abstützflächen (142, 144) im Wesentlichen orthogonal zur Drehachse (A) steht.

5. Torsionsschwingungsdämpferanordnung nach Anspruch 3 oder 4,
**dadurch gekennzeichnet, dass** die zweiten Abstützflächen (148, 150) bezüglich der Drehachse (A) im Wesentlichen konisch geneigt verlaufen.

6. Torsionsschwingungsdämpferanordnung nach Anspruch 3, 4 oder 5,
**dadurch gekennzeichnet, dass** das zweite Dichtungselement (140) nicht in Kontakt mit der zweiten Verdrängungskammerbaugruppe (46) ist oder treten kann.

7. Torsionsschwingungsdämpferanordnung nach einem der Ansprüche 3 bis 6,
**dadurch gekennzeichnet, dass** das Vorspannelement (146) eine Wellfeder oder eine Tellerfeder ist.

8. Torsionsschwingungsdämpferanordnung nach einem der Ansprüche 3 bis 7,
**dadurch gekennzeichnet, dass** in der Stirnwandung (26, 28) wenigstens eine Verbindungsaussparung (154) gebildet ist, über welche eine Fluidverbindung zwischen wenigstens einer Verdrängungskammer (32, 33) und einer von der zweiten Verdrängungskammerbaugruppe (46) abgewandten Seite des zweiten Dichtungselements (140) gebildet ist.

9. Torsionsschwingungsdämpferanordnung nach einem der Ansprüche 2 bis 8,
**dadurch gekennzeichnet, dass** der zweite Dichtungsbereich (132) in der Stirnwandung (26, 28) oder der zweiten Verdrängungskammerbaugruppe (46) eine nutartige und radial offene Einsenkung (156) umfasst, in welcher ein am jeweils anderen Bauteil dichtend anliegendes ringartiges Dichtungselement (158) angeordnet ist.

10. Torsionsschwingungsdämpferanordnung nach Anspruch 9,
**dadurch gekennzeichnet, dass** dem ringartigen Dichtungselement (158) eine Vorspannanordnung (160) zugeordnet ist, um dieses in Anlage an dem jeweils anderen Bauteil vorzuspannen.

11. Torsionsschwingungsdämpferanordnung nach Anspruch 10,
**dadurch gekennzeichnet, dass** die Vorspannanordnung (160) wenigstens ein federelastisch wirksames Vorspannelement umfasst.

12. Torsionsschwingungsdämpferanordnung nach Anspruch 10 oder 11,
**dadurch gekennzeichnet, dass** die Vorspannanordnung eine Druckfluidverbindung umfasst, über welche die nutartige Einsenkung (156) in Verbindung mit wenigstens einer Verdrängungskammer (32, 33) ist.

13. Torsionsschwingungsdämpferanordnung nach Anspruch 9,
**dadurch gekennzeichnet, dass** das ringartige Dichtungselement als offener Ring mit einem Umfangsunterbrechungsbereich ausgebildet ist.

14. Torsionsschwingungsdämpferanordnung nach einem der Ansprüche 2 bis 13,
**dadurch gekennzeichnet, dass** die beiden ersten Dichtungsanordnungen (64, 64) zueinander im Wesentlichen gleich aufgebaut sind.

15. Torsionsschwingungsdämpferanordnung nach einem der Ansprüche 1 bis 14,
**dadurch gekennzeichnet, dass** wenigstens eine zweite Dichtungsanordnung (66) ein in eine radial und axial offene spaltartige Aussparung (68, 70) in einem Umfangsbegrenzungsvorsprung (56, 58) eingesetztes, radial und axial vorgespanntes Dichtungselement (170) umfasst.

16. Torsionsschwingungsdämpferanordnung nach Anspruch 15,
**dadurch gekennzeichnet, dass** das Dichtungselement (170) rahmenartig ausgebildet ist und in dem rahmenartigen Dichtungselement (170) wenigstens ein dieses radial oder/und axial vorspannendes Vorspannelement (172) angeordnet ist.

17. Torsionsschwingungsdämpferanordnung nach Anspruch 16,
**dadurch gekennzeichnet, dass** der Innenvolumenbereich des rahmenartigen Dichtungselements (170) an beiden Seiten durch Abdeckelemente (182, 184) abgeschlossen ist.

18. Torsionsschwingungsdämpferanordnung nach Anspruch 17,
**dadurch gekennzeichnet, dass** in wenigstens einem der Abdeckelemente (182, 184) eine Fluideintrittsöffnung (186, 188) vorgesehen ist.

19. Torsionsschwingungsdämpferanordnung nach einem der Ansprüche 1 bis 18,
**dadurch gekennzeichnet, dass** wenigstens eine dritte Dichtungsanordnung (98) ein in eine Umfangseinsenkung (102) eines Trennkolbens (42) eingesetztes ringartiges Dichtungselement (100) und diesem zugeordnet eine Vorspannanordnung (108) umfasst, durch welche das Dichtungselement (100) nach radial außen gegen eine Innenumfangsfläche (106) des Ausgleichszylinders (34) vorgespannt ist.

20. Torsionsschwingungsdämpferanordnung nach Anspruch 19,
**dadurch gekennzeichnet, dass** die Umfangseinsenkung (102) durch wenigstens eine Verbindungsöffnung (110) in Verbindung mit einem erstes Dämpferfluid enthaltenden Raumbereich ist.

21. Torsionsschwingungsdämpferanordnung nach Anspruch 19 oder 20,
**dadurch gekennzeichnet, dass** das ringartige Dichtungselement als offener Ring mit einem Umfangsunterbrechungsbereich ausgebildet ist.

22. Torsionsschwingungsdämpferanordnung nach einem der Ansprüche 1 bis 21,
**dadurch gekennzeichnet, dass** in Zuordnung zu wenigstens einer der Bewegungsendlagen eines Trennkolbens (42) die dritte Dichtungsanordnung (98) vorzugsweise ein an dem Ausgleichszylinder (34) vorgesehenes und in der Bewegungsendlage eine Dichtungswirkung zwischen dem Trennkolben (42) und dem Ausgleichszylinder (34) erzeugendes Dichtungselement (114, 116) umfasst.

23. Torsionsschwingungsdämpferanordnung nach einem der Ansprüche 1 bis 22,
**dadurch gekennzeichnet, dass** in einem Trennkolben (42) oder/und einem eine Ausgleichskammer (36) in einem Ausgleichszylinder (34) abschließenden Abschlusselement (78) eine zur Ausgleichskammer (36) hin offene Aufnahmeaussparung (90) für in der Ausgleichskammer (36) enthaltenes zweites Dämpferfluid vorgesehen ist.

24. Torsionsschwingungsdämpferanordnung nach einem der Ansprüche 1 bis 23,
**dadurch gekennzeichnet, dass** die erste Verdrängungskammerbaugruppe (24) bezüglich der zweiten Verdrängungskammerbaugruppe (46) über eine Lageranordnung (48) drehbar gelagert ist.

25. Torsionsschwingungsdämpferanordnung nach Anspruch 24,
**dadurch gekennzeichnet, dass** die Lageranordnung (48) ein Wälzkörperlager, vorzugsweise Nadellager, umfasst.

26. Torsionsschwingungsdämpferanordnung nach Anspruch 24,
**dadurch gekennzeichnet, dass** die Lageranordnung (48) ein Gleitlager umfasst.

27. Torsionsschwingungsdämpferanordnung nach einem der Ansprüche 24 bis 26,
**dadurch gekennzeichnet, dass** die Lageranordnung (48) als ein eine Axialrelativbewegbarkeit der beiden Verdrängungskammerbaugruppen (24, 46) nicht behinderndes Loslager ausgebildet ist.
